# FASCICULE DE BREVET EUROPEEN

(11) **EP 2 655 133 B1**
(45) Date de publication et mention de la délivrance du brevet: **17.06.2015**
(21) Numéro de dépôt: 11802503.0
(22) Date de dépôt: 23.11.2011
(51) Int. Cl.: B60R 1/06

(54) **ELEMENT D'ETANCHEITE POUR RETROVISEUR EXTERIEUR ET UN RETROVISEUR COMPORTANT UN TEL ELEMENT D'ETANCHEITE.**
DICHTUNGSELEMENT FÜR EINEN ÄUSSEREN RÜCKSPIEGEL, UND RÜCKSPIEGEL MIT SOLCH EINEM DICHTUNGSELEMENT
SEALING ELEMENT FOR AN OUTER REAR-VIEW MIRROR, AND A REAR-VIEW MIRROR COMPRISING SUCH A SEALING ELEMENT

(30) Priorité: 20.12.2010 FR 1060773
(43) Date de publication de la demande: 30.10.2013
(73) Titulaire: Peugeot Citroën Automobiles SA, 78140 Vélizy Villacoublay (FR)
(72) Inventeur: MARTEAU, Cédric, F-75011 Paris (FR)
(86) Numéro de dépôt international: PCT/FR2011/052743
(87) Numéro de publication internationale: WO 2012/085373

(56) Documents cités:
- FR-A- 1 418 275
- FR-A1- 2 711 594

## Description

L'invention se rapporte à un élément d'étanchéité pour rétroviseur extérieur, à un rétroviseur comportant un tel élément d'étanchéité et à un ouvrant équipé d'un tel rétroviseur.

Avec la généralisation de l'utilisation de commandes électriques afin de commander des circuits électriques équipant des rétroviseurs extérieurs, il est devenu primordial d'assurer l'étanchéité des rétroviseurs et ainsi limiter les risques de court-circuits que pourrait créer toute pénétration d'eau ou d'air.

Ces risques étant principalement présents au niveau du point d'attache du rétroviseur sur l'ouvrant qu'il équipe, il est connu de limiter ces risques en disposant un élément d'étanchéité à ce niveau.

Cet élément d'étanchéité est disposé entre le cache-embase du rétroviseur et la surface de l'ouvrant avec un impact sur l'esthétique générale du véhicule.

Pour limiter cet impact, il est connu d'équiper le rétroviseur d'un élément d'étanchéité entièrement logé dans le cache-embase du rétroviseur. Un tel élément d'étanchéité comporte un corps, en contact avec l'embase du rétroviseur, à partir duquel s'étend une lèvre rigide en appui sur la surface de l'ouvrant. Le brevet FR2711594 divulgue un joint d'étanchéité entre un rétroviseur et la surface de l'ouvrant sur lequel ledit rétroviseur est fixé, joint d'étanchéité conforme au préambule de la revendication 1.

Si ce type d'élément d'etanchéité permet d'assurer l'étanchéité du rétroviseur en limitant l'impact esthétique sur le véhicule, il nécessite un accostage entre le cache-embase du rétroviseur et la surface de l'ouvrant parfaitement réglé. En effet, en raison de la raideur de la lèvre d'étanchéité, tout jeu entre le cache-embase et la surface de l'ouvrant entraine une rupture de l'étanchéité et donc un risque important de court-circuits en cas d'intempérie.

L'invention vise à remédier à cet inconvénient.

Un but de l'invention est donc de fournir un élément d'étanchéité pour rétroviseur extérieur qui, tout en présentant un impact esthétique sur le véhicule réduit, ne présente pas de risque de rupture d'étanchéité lors de l'apparition d'un jeu entre le cache-embase et la surface de l'ouvrant.

A cet effet, l'invention concerne un élément d'étanchéité ayant les caractéristiques de la revendication 1.

La deuxième lèvre permet ainsi d'assurer l'étanchéité de rétroviseur lorsqu'un jeu apparait entre le cache-embase et la surface de l'ouvrant.

Avantageusement, la deuxième lèvre est déformable élastiquement.

Une telle déformation élastique de la deuxième lèvre en combinaison avec l'appui de celle-ci sur la surface de l'ouvrant permet d'assurer que la lèvre reste en appui sur la surface de l'ouvrant même en cas de jeu entre le cache-embase et la surface de l'ouvrant.

De manière préférentielle, l'élément d'étanchéité est monobloc

Le fait que l'élément d'étanchéité est monobloc supprime les risques de fuites au niveau de la jonction entre les différentes parties constituantes de l'élément d'étanchéité.

L'invention se rapporte également à un rétroviseur, destiné à équiper un ouvrant d'un véhicule, comportant une embase et un cache embase, comprenant un élément d'étanchéité selon l'invention, le corps étant en contact avec l'embase et la première lèvre étant en contact avec le cache-embase.

En raison de l'utilisation d'un tel élément d'étanchéité, un rétroviseur selon l'invention présente un risque minime de rupture d'étanchéité au niveau de la jonction entre le cache-embase et la surface de l'ouvrant.

Préférentiellement, l'élément d'étanchéité est entièrement logé dans le cache-embase.

Un tel logement de l'élément d'étanchéité assure une installation discrète de l'élément d'étanchéité en évitant tout impact esthétique sur le véhicule.

L'agencement de la deuxième lèvre sur le corps permet à la deuxième lèvre d'assurer l'étanchéité au plus prêt de la première lèvre.

La conformation de l'élément d'étanchéité permet d'assurer l'appui de l'embase sur l'élément d'étanchéité assurant ainsi les forces nécessaires pour appuyer la première et la deuxième lèvre sur la surface de l'ouvrant.

L'invention se rapporte également à un ouvrant de véhicule présentant une surface et étant équipé d'un rétroviseur selon l'invention, la première et la deuxième lèvre étant en appui contre la surface.

Un tel ouvrant présente des risques de pénétration d'eau réduits au niveau du point d'accroche du rétroviseur.

De toute façon l'invention sera bien comprise à l'aide de la description qui suit en référence au dessin schématique annexé représentant, à titre d'exemple non limitatif, une forme d'exécution de cet élément d'étanchéité, d'un rétroviseur comportant un tel élément d'étanchéité et d'un ouvrant équipé d'un tel rétroviseur.
La figure 1 est une vue en perspective d'un rétroviseur selon l'invention équipant un ouvrant.
La figure 2 est une vue en coupe schématique du rétroviseur représenté à la figure 1.

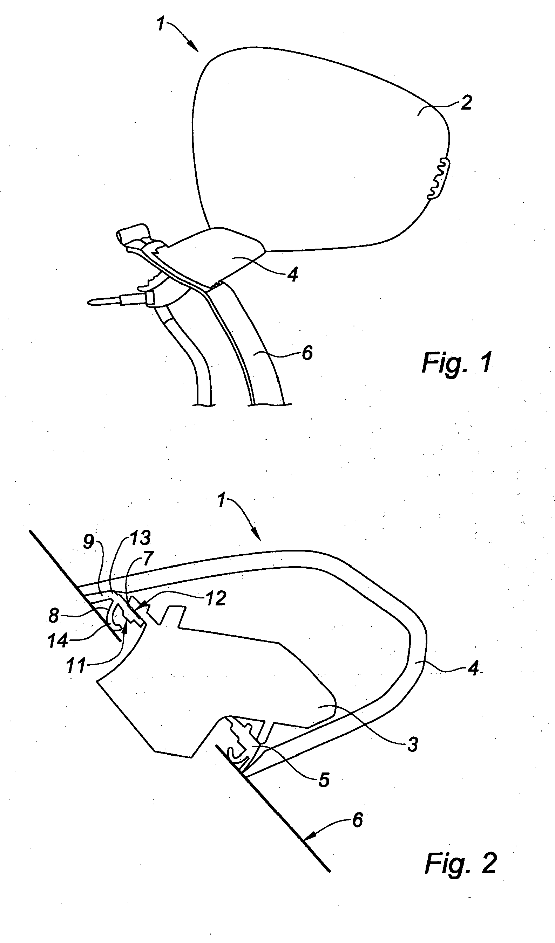

Les figures 1 et 2 illustrent un rétroviseur 1 équipant un ouvrant de véhicule (non représenté). Plus précisément, ce rétroviseur 1 comporte :
   - une partie réfléchissante (non représentée),
   - une enveloppe extérieure 2 disposée autour de la partie réfléchissante,
   - une embase 3 supportant la partie réfléchissante et l'enveloppe extérieure 2, et assurant le lien avec l'ouvrant,
   - un cache embase 4 autour de l'embase 3, assurant l'esthétique de la liaison avec l'ouvrant,
   - un élément d'étanchéité 5 disposé entre le cache-embase 4 et la surface 6 de l'ouvrant.

L'élément d'étanchéité 5 est monobloc et comporte :
- un corps 7,
- une première lèvre 8 s'étendant à partir du corps 7,
- une seconde lèvre 9 s'étendant à partir du corps 7.

Le corps 7 est disposé autour de l'embase 3 du rétroviseur 1. Le corps 7 présente une forme générale plane avec en son centre un passage 10 pour l'embase 3 du rétroviseur 1. Le corps 7 présente une première face 11, en regard de la surface 6 de l'ouvrant, et une deuxième face 12 opposée à la première face 11. Le corps 7 présente en outre un bord 13, dit extérieur, opposé à l'embase 3 du rétroviseur 1.

La deuxième face 12 est conformée pour être mise en appui par l'embase 3 de façon à ce que la première et la seconde lèvre 8 et 9 soient en appui contre la surface 6 de l'ouvrant.

La première lèvre 8 s'étend à partir du corps 7 à partir de son bord extérieur 13 de façon à ce que la première lèvre 8 soit en contact avec le cache embase 4 et en appui contre la surface 6 de l'ouvrant 7. La première lèvre 8 comporte une partie déformable 14.

La deuxième lèvre 9 est une lèvre déformable élastiquement. La deuxième lèvre 9 s'étend à partir du corps 7 à proximité de la première lèvre 8. La deuxième lèvre 9 est orientée en direction de l'embase 3 de façon à être en appui sur la surface 6 de l'ouvrant. Cet appui déforme la deuxième lèvre 9 en contact avec la surface 6 de l'ouvrant.

Ainsi lors du montage de l'élément d'étanchéité 5 sur le rétroviseur 1 et lorsque que ce dernier est monté sur l'ouvrant, l'élément d'étanchéité 5 est disposé autour de l'embase 3 avec la première lèvre 8 en contact le cache-embase 4. Le positionnement du rétroviseur 1 sur l'ouvrant met en appui la première et la seconde lèvre 8 et 9 sur la surface 6 de l'ouvrant en permettant ainsi de garantir l'étanchéité entre le rétroviseur 1 et la surface 6 de l'ouvrant.

## Revendications

1. Elément d'étanchéité (5) d'un rétroviseur (1) extérieur prévu pour équiper un ouvrant d'un véhicule, ledit élément d'étanchéité (5) étant destiné à être interposé entre un cache-embase (4) du rétroviseur (1) et une surface (6) de l'ouvrant, l'élément d'étanchéité (5) comprenant :
- un corps (7) destiné à être en contact avec une embase (3) du rétroviseur (1),
- une première lèvre (8) d'étanchéité qui comporte une partie déformable (14) s'étendant à partir du corps (7) de façon à être en contact avec le cache embase (4), en y étant entièrement logé, et en appui contre la surface (6) de l'ouvrant,
l'élément d'étanchéité (5) étant **caractérisé en ce qu'**il comprend au moins une deuxième lèvre (9) s'étendant à partir du corps (7) de façon à être en appui sur la surface (6) de l'ouvrant, et le corps (7) présente une face (12) conformée pour être mise en appui par l'embase (3) de façon à ce que la première et la seconde lèvre (8, 9) soient en appui contre la surface (6) de l'ouvrant.

2. Elément d'étanchéité (5) selon la revendication 1, **caractérisé en ce que** la deuxième lèvre (9) est déformable élastiquement.

3. Elément d'étanchéité (5) selon l'une des revendications 1 ou 2, **caractérisé en ce qu'**il est monobloc.

4. Rétroviseur (1), destiné à équiper un ouvrant d'un véhicule, comportant une embase (3) et un cache embase (4), **caractérisé en ce qu'**il comprend un élément d'étanchéité (5) selon l'une des revendication 1 à 3, le corps (7) étant en contact avec l'embase (3) et la première lèvre (8) étant en contact avec le cache-embase (4).

5. Rétroviseur (1) selon la revendication 4 **caractérisé en ce que** l'élément d'étanchéité (5) est entièrement logé dans le cache-embase (4).

6. Rétroviseur (1) selon les revendications 4 ou 5, **caractérisé en ce que** la deuxième lèvre (9) s'étend à partir du corps (7) à proximité de la première lèvre (8).

7. Rétroviseur (1) selon l'une des revendications 4 à 6, **caractérisé en ce que** la deuxième lèvre (9) est orientée en direction de l'embase (3) de façon à être en appui sur la surface (6) de l'ouvrant.

8. Ouvrant de véhicule présentant une surface (6) et étant **caractérisé en ce qu'**il est équipé d'un rétroviseur (1) selon l'une des revendications 4 à 7, la première et la deuxième lèvre (8) et (9) étant en appui contre la surface (6).

## Patentansprüche

1. Dichtungselement (5) eines äußeren Rückspiegels (1), der vorgesehen ist, um eine Fahrzeugtür auszustatten, wobei das Dichtungselement (5) dazu bestimmt ist, zwischen eine Grundplattenabdeckung (4) des Rückspiegels (1) und eine Oberfläche (6) der Tür eingefügt zu werden, wobei das Dichtungselement (5) Folgendes umfasst:
- einen Körper (7), der dazu bestimmt ist, mit einer Grundplatte (3) des Rückspiegels (1) in Berührung zu sein,
- eine erste Dichtlippe (8), die einen verformbaren Teil (14) umfasst, der sich ausgehend von dem Körper (7) derart erstreckt, dass er mit der Grundplattenabdeckung (4) in Berührung ist, indem er darin vollständig aufgenommen ist und in Auflage gegen die Oberfläche (6) der Tür,
Dichtungselement (5) **dadurch gekennzeichnet, dass** es mindestens eine zweite Lippe (9) umfasst, die sich ausgehend von dem Körper (7) derart erstreckt, dass sie auf der Oberfläche (6) der Tür in Auflage ist und dass der Körper (7) eine Seite (12) aufweist, die ausgebildet ist, um durch die Grundplatte (3) derart in Auflage gebracht zu werden, dass die erste und die zweite Lippe (8, 9) gegen die Oberfläche (6) der Tür in Auflage sind.

2. Dichtungselement (5) nach Anspruch 1, **dadurch gekennzeichnet, dass** die zweite Lippe (9) elastisch verformbar ist.

3. Dichtungselement (5) nach einem der Ansprüche 1 oder 2, **dadurch gekennzeichnet, dass** sie einstückig ist.

4. Rückspiegel (1), der dazu bestimmt ist, eine Tür eines Fahrzeugs auszustatten, der eine Grundplatte (3) und eine Grundplattenabdeckung (4) umfasst, **dadurch gekennzeichnet, dass** er ein Dichtungselement (5) nach einem der Ansprüche 1 bis 3 umfasst, wobei der Körper (7) mit der Grundplatte (3) in Berührung ist und die erste Lippe (8) mit der Grundplattenabdeckung (4) in Berührung ist.

5. Rückspiegel (1) nach Anspruch 4, **dadurch gekennzeichnet, dass** das Dichtungselement (5) vollständig in der Grundplattenabdeckung (4) aufgenommen ist.

6. Rückspiegel (1) nach den Ansprüchen 4 oder 5, **dadurch gekennzeichnet, dass** sich die zweite Lippe (9) ausgehend von dem Körper (7) in der Nähe der ersten Lippe (8) erstreckt.

7. Rückspiegel (1) nach einem der Ansprüche 4 bis 6, **dadurch gekennzeichnet, dass** die zweite Lippe (9) in Richtung der Grundplatte (3) derart ausgerichtet ist, dass sie auf der Oberfläche (6) der Tür aufliegt.

8. Fahrzeugtür, die eine Oberfläche (6) aufweist und **dadurch gekennzeichnet ist, dass** sie mit einem Rückspiegel (1) nach einem der Ansprüche 4 bis 7 ausgestattet ist, wobei die erste (8) und die zweite Lippe (9) gegen die Oberfläche (6) in Auflage sind.

## Claims

1. A sealing element (5) for an outer rear-view mirror (1) that is to be provided to equip a movable panel of a vehicle, said sealing element (5) being intended to be positioned between a base cover (4) of the rear-view mirror (1) and a surface (6) of the movable panel, the sealing element (5) including:
- a body (7) intended to be in contact with a base (3) of the rear-view mirror (1),
- a first sealing lip (8) which comprises a deformable part (14) extending from the body (7) so as to be in contact with the base cover (4), being entirely housed there, and resting against the surface (6) of the movable panel,
the sealing element (5) being **characterized in that** it includes at least one second lip (9) extending from the body (7) so as to rest on the surface (6) of the movable panel, and the body (7) has a face (12) shaped to be supported by the base (3) such that the first and the second lip (8, 9) are resting against the surface (6) of the movable panel.

2. The sealing element (5) according to Claim 1, **characterized in that** the second lip (9) is deformable elastically.

3. The sealing element (5) according to one of Claims 1 or 2, **characterized in that** it is in a single piece.

4. A rear-view mirror (1), intended to equip a movable panel of a vehicle, comprising a base (3) and a base cover (4), **characterized in that** it includes a sealing element (5) according to one of Claims 1 to 3, the body (7) being in contact with the base (3) and the first lip (8) being in contact with the base cover (4).

5. The rear-view mirror (1) according to Claim 4, **characterized in that** the sealing element (5) is housed entirely in the base cover (4).

6. The rear-view mirror (1) according to Claims 4 or 5, **characterized in that** the second lip (9) extends from the body (7) close to the first lip (8).

7. The rear-view mirror (1) according to one of Claims 4 to 6, **characterized in that** the second lip (9) is oriented in the direction of the base (3) so as to rest on the surface (6) of the movable panel.

8. A movable of a vehicle having a surface (6) and being **characterized in that** it is equipped with a rear-view mirror (1) according to one of Claims 4 to 7, the first and the second lip (8) and (9) resting against the surface (6).
